# EUROPEAN PATENT APPLICATION

(11) **EP 1 527 700 A1**
(43) Date of publication of application: **04.05.2005**
(21) Application number: 03256849.5
(22) Date of filing: 29.10.2003
(51) Int. Cl.: A23K 1/16, A23K 1/18

(54) **Fish feed and process for preparing the same**

(71) Applicant: CERESTAR HOLDING B.V., 4551 LA Sas Van Gent (NL)
(72) Inventor: The designation of the inventor has not yet been filed
(74) Representative: Wilkinson, Stephen John

(57) **Abstract**

A fish feed composition characterised in that it comprises 1-75% by weight gluten and 25-85% dehulled oilseed and/or maize germ, pellets formed therefrom and methods of manufacture thereof.

## Description

### Technical Field

The present invention relates to a high oil and protein content fish feed composition, uses thereof and methods of preparing pellets therefrom.

### Background of the Invention

Fish farming is an increasingly thriving industry in many parts of the world. Profitability, however, is badly affected by high feed costs which account for approximately half of overall operating costs.

Indeed, fish feed must, for nutritional reasons, contain about 35-50% protein. Protein, however, is expensive. This is due, in particular, to an excessive reliance on fish meal, the quality and prices of which are variable and the global supply of which is declining despite increasing demand. The use of fish meal is also undesirable for environmental and water pollution reasons.

In addition to protein, fish feed should, ideally, also contain 40% or more oil. Although oils are not, in themselves, expensive, methods suggested to date for incorporating oils into fish feeds have proved both costly and unsatisfactory.

If a significant quantity of oil is included in the feed components prior to their extrusion into pellets, the oil interferes with the extrusion process leading to pellets with relatively low strength. Alternatively, if the oil is applied to pre-formed pellets, the oil is not properly absorbed and leaks out both during storage and in use resulting in reduced energy content, pollution and malfunctioning of feed-handling equipment.

In WO98/49904, it was suggested that the above problems could be overcome by forming porous feed pellets by extrusion, drying, and absorbing oil into said pellets by vacuum coating. However, extrusion is an expensive process (both in terms of machinery and in terms of energy input required), it is not yet perfectly controlled and it gives variable results. In addition, extruded fish feed is very delicate and must be transported using specialised systems to minimise damage. What is more, the method suggested in WO98/49904 does not, in practice, allow for the production of fish feed having an oil content of much over 35% by weight.

An alternative method (WO97/22265) suggested coating the extrusion formed pellets with water soluble starches. Although this addresses the problem of poor water stability (many high oil content pellets of the prior art have a tendency to disintegrate when immersed in water), the resulting pellets could not support an oil content much beyond 25% by weight. In addition, the use of starches in the composition is uneconomical insofar as they are not (or only poorly) digested by fish. They therefore have no nutritional benefit and are considered to amount to wasted expenditure.

There is therefore a clear need for an alternative and more economical method of producing high oil content fish feed. The present invention provides such a method.

### Summary of the Invention

According to a first aspect of the present invention, there is provided a fish feed composition characterised in that it comprises 1-75%, preferably 5-75% and even more preferably 15-75% by weight gluten (such as vital wheat gluten) and 25-85%, preferably 40-85% by weight dehulled oilseed (such as dehulled oilseed rape) and/or maize germ.

In one embodiment, the composition may comprise:
- 25-55% by weight, preferably 35-55% by weight lipids;
- 30-75% by weight protein;
- 0-15% by weight carbohydrate; and
- 0-5% by weight additives.

According to a further aspect of the present invention, there is provided a use of the composition as described in the preparation of a shaped, hardened, dried, flaked and/or coated fish feed, preferably in the preparation of fish feed pellets.

According to another aspect of the present invention, there is provided a fish feed pellet characterised in that it comprises at least 75% of the described composition and, in one embodiment, a coating.

According to yet another aspect of the present invention, there is provided a process for preparing a fish feed composition comprising blending 1-75%, preferably 5-75%, even more preferably 15-75% by weight gluten; 25-85% by weight, preferably 40-85% by weight dehulled oilseed and/or maize germ; and optionally, one or more additional ingredients (such as additional protein or lipid sources, carbohydrate sources, and additives).

According to a further aspect of the present invention, there is provided a process for preparing fish feed pellets characterised in that it consists of (a) blending the ingredients of the fish feed composition; and (b) shaping the blend obtained in step (a) into pellets.

In one embodiment, said process may further comprise a step (c₁) of treating the pellets obtained in step (b) with steam for 1 to 30 seconds and/or a step (c₂) of coating the pellets obtained in step (b) or (c₁).

### Detailed Description

The present invention relates to a fish feed composition comprising 1-75% by weight gluten and 25-85% by weight dehulled oilseed and/or maize germ.

Gluten is the protein found in many grains and cereals such as wheat, corn, oats, rye and barley. The term "gluten" as used herein refers to gluten from any available source and to mixtures of gluten from different sources. The gluten may be in its native form, or it may be modified. Preferably, the gluten will comprise 50% - 100% by weight vital wheat gluten.

Gluten is comprised in the composition of the present invention in quantities of 1-75%, preferably 5-75%, even more preferably 15-75% by weight, even more preferably 20-50% by weight. In any event, the composition should ideally comprise 30-75% by weight protein overall (for some young fish, for example, it is desirable to have a protein content of approximately 70%). Preferably, the composition will comprise 40-60% by weight protein overall. If necessary, further sources of protein can also be added. These can include any one or more vegetable or animal sources (such as soy concentrate or fishmeal), or mixtures thereof.

As mentioned above, the composition also comprises 25-85% by weight dehulled oilseed and/or maize germ. Preferably, it comprises 40-85%, even more preferably 55-85% by weight dehulled oilseed and/or maize germ.

Oilseed plants include rape, safflower, sunflower, soya, flax, cotton, mustard and crambe (or other plants of the Brassica genus) for example. Any one or more of these can be used as the source of dehulled oilseed. By removing the hull (which contains mostly indigestible carbohydrates), the amount of oil available from the seeds is substantially increased. Any method available in the art can be used to dehull the seeds.

As an alternative (or, indeed, in addition) to the dehulled oilseeds, other high oil content plant components can also be used as a source of lipids. The most preferred of these is maize germ. If additional sources of lipids are required, these can be selected from any one or more vegetable or animal sources (such as soy oil, corn oil, palm oil, castor bean oil, maize germ oil, fishmeal or fish oil), or mixtures thereof. The overall content of lipids in the fish feed composition should preferably be 25-55% by weight, even more preferably 35-55 % by weight.

The composition of the invention may also contain one or more carbohydrates. Preferably, it will comprise 0-15% by weight carbohydrate material. The carbohydrates can be used as binding or bulking agents or as a source of energy. In one embodiment, the carbohydrate will be one or more cold water soluble starches or starch derivatives.

Additional feed ingredients may include, for example, vitamins and minerals nutritionally required by fish, amino acids, pigments, antioxidants, colouring agents, enzymes, carotenoids, preservatives, pro- and/or prebiotics, trace elements and any other compounds commonly used in small quantities in feed compositions. Preferably, the composition will contain up to 5% by weight of such additives.

The composition can be prepared simply by blending gluten and dehulled oilseed (and/or maize germ) in the quantities specified above, if necessary with water or other aqueous solution. Where it is desired to include one or more carbohydrates and/or additives, these can be incorporated by blending with the other components of the composition. No heating or other potentially costly treatments are required. Indeed, because the composition includes dehulled oilseed as its main oil source, no energy input is required for oil extraction. Blending can be carried out in any suitable mixer. These will be apparent to the person skilled in the art, but include, by way of example, ribbon mixers, plough shares, nauta mixers and continuous mixing screws.

The composition can be used in the preparation of high oil content shaped, hardened, dried, flaked and/or coated fish feed. In a preferred embodiment, there is provided the use of the above composition in the preparation of fish feed pellets.

Said pellets will advantageously comprise at least 75%, preferably up to 100% by weight of the composition of the invention. Ideally, the pellets will comprise 95-100% by weight of said composition.

It has surprisingly been found that despite the high oil content of the composition of the present invention, very little leakage occurs when the pellets are immersed in aqueous media. It is therefore not necessary to coat the pellets of the present invention to prevent oil leakages. Nonetheless, a coating can be applied if desired (e.g. to improve handling properties).

The coating will preferably include one or more cold water soluble starches or starch derivatives such as pre-gelatinised starch and/or maltodextrin. It may also (or alternatively) include one or more of wheat gluten, hydrolysed wheat protein and gelatine. Other materials suitable for use in coating fish feed pellets will be known to the skilled person.

It has surprisingly been found that the pellets of the present invention can be prepared simply by (a) blending the ingredients of the fish feed composition (as described above) and (b) shaping the obtained blend into pellets. Again, no heating or other potentially costly treatments are required. Thus, the use of an extruder for the preparation of pellets can be avoided. Accordingly, energy input can be reduced and, advantageously, the process can be applied at farm level (without the requirement for special machinery or skills).

The choice of the pellet shape, volume and weight will of course depend on the desired application. For example, different fish types will require different pellets. The pellets of the present invention can be adapted for any type of farmed fish including yellowtail, sea bream, halibut, yellow jack, carp, trout, eel, cat fish and, most preferably, salmon. The specific (nutritional and physical) requirements for each of these fish types will be known to the skilled person.

According to one embodiment, the process of preparing the pellets of the present invention may comprise a further step (c₁) of treating the pellets obtained in step (b) with steam for 1 to 30 seconds. This simple procedure allows the surface of the pellet to be hardened thereby further improving the pellets' oil retention and water stability properties. The thickness of the hardened layer will increase with the length of steam treatment and will affect the sinking behaviour of the resultant pellets. Thus, this steam treatment can be used to ensure that the pellets have the correct floatability for the type of fish being fed. It will also improve the pellets resistance against physical stress, for instance during storage, transport and distribution.

Although not necessary, a coating step (c₂) can also be included, as mentioned above. Examples of materials that can be used for coating have been listed. The coating step can be used in addition to or instead of the steam treatment and it can include the application of several coats (depending, for instance, on the final thickness required), the application sages being separated by drying stages.

The invention will now be described in more detail by way of the following nonlimiting examples.

### Examples

Fish feed compositions were prepared, using the following ingredients:
- Vital Wheat Gluten (Cerestar: C 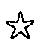 Gluvital 21000)
- Corn gluten (Cerestar maize gluten meal C*13871)
- LT Fish Meal 70% crude protein
- Premix of Mineral ,Vitamins and other additives
- Sunflower Oil (Vandemoortele)
- Dehulled rapeseed (extruded and/or heat treated if desired)

### Mixture 1:

A fish feed based on the combination of vital wheat gluten, corn gluten, dehulled rapeseed meal and fishmeal:

| | g (as is) | Oil (%) | Oil (g) | Protein (%) | Protein (g) |
|---|---|---|---|---|---|
| Vital wheat gluten | 12 | 6 | 2.4 | 77 | 9.24 |
| Corn gluten | 9 | 5 | 0.45 | 60 | 5.4 |
| Dehulled Rape Seed meal | 60 | 50 | 30 | 35 | 21 |
| Fishmeal | 10 | 9 | 0.9 | 72 | 5.04 |
| Sunflower Oil | 8 | 100 | 8 | 0 | 0 |
| Additives/premix | 1 | 0 | 0 | 50 | 0.5 |
| **Total** | 100 | **40.07** | 40.07 | **43.34** | 43.34 |

### Mixture 2:

A fish feed based on the combination of vital wheat gluten, corn gluten and dehulled rapeseed meal:

| | g (as is) | Oil (%) | Oil (g) | Protein (%) | Protein (g) |
|---|---|---|---|---|---|
| Vital wheat gluten | 19 | 6 | 1.2 | 77 | 14.6 |
| Dehulled Rape Seed meal | 68 | 50 | 34 | 35 | 23.8 |
| Sunflower Oil | 12 | 100 | 12 | 0 | 0 |
| Additives/premix | 1 | 0 | 0 | 50 | 0.5 |
| **Total** | 100 | **47.2** | 47.2 | **38.9** | 38.9 |

### Mixtures 3 and 4:

Fish feeds based on the combination of wheat gluten, corn gluten meal, dehulled rapeseed and herring meal:

| | Mix 3 | Mix 4 | Cost (Euro/kg) |
|---|---|---|---|
| Dehulled rapeseed | 36 | 29 | 0.23 |
| Corn gluten meal | 14.2 | 8.3 | 0.38 |
| Lysine HCl | 0.1 | 1.1 | 2.00 |
| Vegetable oils | 2.9 | 7 | 0.5 |
| Herring meal | 20 | - | 0.72 |
| Fish oil | 10 | 10 | 0.62 |
| Wheat gluten | 15.8 | 41.8 | 41.8 |
| Phosphate | - | 1.8 | 0.37 |
| Premix of vitamins, micro-elements and additives | 1 | 1 | |
| **Total Protein** (%) | 43.3 | 46.1 | |
| **Total Lipids** (%) | 35 | 35 | |

Mixtures 1-4 were blended and formed into pellets according to the following methods:

### Method 1

The components of the above compositions were put in a 11 cup and mixed in a blender (Waring Blender 8010, speed 22000 rpm with no-load), without additional heating, during 60 seconds. After mixing, a paste is formed in which all the oil of the composition is absorbed. This paste has sufficient firmness for it to be formed into a fixed shape. If necessary, firmness can be increased by the addition of 3-5% by weight water into the mixture during blending.

The blended fish feed is shaped by putting it through a meat mincer and cutting it at the exit. This results in a fish feed with a cylindrical shape, a diameter of up to 5mm and a length of approximately 10mm. Finally, the pellets are treated, for a few seconds, with steam to create a hard surface layer.

### Method 2

A paste is prepared and shaped using a meat mincer as in Method 1. The shaped fish feed is then placed in a 250µm sieve and a 10% suspension of pre-gelled starch (C*Gel-Instant 12005) is poured over it. After sieving off excess suspension, the fish feed is powdered with pre-gelled starch. After gentle air drying, a hard surface layer is formed. If a thicker and/or harder surface layer is required, the treatment with pre-gelled starches can be repeated.

### Method 3

A paste is prepared and shaped as in Method 1. Further treatment follows the same procedure as in Method 2 but with the following types of suspension and powdering:

| **suspension** | **powdering** |
|---|---|
| 10% pre-gelled starch | Maltodextrin |
| 10% pre-gelled starch | Vital wheat gluten |
| 10 % pre-gelled starch | Hydrolyse wheat protein |
| 10 % pre-gelled starch | none |
| Gelatine | Maltodextrin |
| Gelatine | Vital wheat gluten |
| Gelatine | Hydrolysed wheat protein |
| Gelatine | none |

The different treatments described above all result in hard surface layers. Repetitive treatments give a thicker and harder surface layer. Differences in floatability were noticed depending on the type and the thickness of the surface layer applied.

### Method 4

The dry ingredients of mixtures 1, 2, 3 or 4 were placed in a dosing screw that forms the dry feeding supply of a Clextral BC45 extruder. Any fluid ingredients were blended and dosed to a pump that forms the wet feeding supply of the extruder.

The extruder is operated as a mixing device. No additional heating is used. The mixture leaves the extruder as a dough into which all the oil has been absorbed. This paste has sufficient firmness for it to be formed into a fixed shape. If necessary, firmness can be increased by the addition of 3-5% by weight water at the fluid inlet of the extruder.

Pellets are formed by cutting the paste at the extruder outlet using the rotating knife. The extruder used to form the pellets has a circle-shaped exit resulting in cylindrical shaped pellets.

The pellets fall onto a perforated conveyer on which they are treated with steam for a few seconds, resulting in a hard surface layer.

### Method 5

A paste is prepared and shaped as in Method 4. The formed fish feed falls on a perforated conveyer that runs through a bath containing a suspension as described in Methods 2 or 3. The fish feed is powdered and gently dried after excess suspension has been flowed off through the conveyer. The powder is the same as described in examples 2 and 3. This treatment results in a hard surface layer.

In all of the above methods, pellets are formed with hard surface layers (either through steam treatment of by coating). The hard surface layer prevents oil from leaking and of gives the pellets strength. As a result, the pellets are stable, do not loose oil, and have a sinking profile adapted to e.g. farmed salmon production. Hardness is sufficient for resistance against physical stress during storage, transport and distribution.

## Claims

1. A fish feed composition **characterised in that** it comprises 1-75% by weight gluten and 25-85% by weight dehulled oilseed and/or maize germ.

2. The composition according to claim 1, comprising 5-75%, preferably 15-75% by weight gluten.

3. The composition according to claim 1 or 2 wherein the gluten is selected from wheat, oats, rye, barley and corn gluten and mixtures thereof.

4. The composition according to any one of the preceding claims wherein the gluten is vital wheat gluten.

5. The composition according to any one of the preceding claims, comprising 40-85% by weight dehulled oilseed and/or maize germ.

6. The composition according to any one of the preceding claims wherein the dehulled oilseed is selected from dehulled rapeseed, safflower seed, sunflower seed, flaxseed and mixtures thereof.

7. The composition according to any one of the preceding claims, comprising:
- 25-55% by weight, preferably 35-55% by weight lipids;
- 30-60% by weight protein;
- 0-15% by weight carbohydrate; and
- 0-5% by weight additives.

8. The composition according to any one of the preceding claims, wherein the carbohydrate is a cold water soluble starch or starch derivative.

9. Use of the composition according to any one of the preceding claims in the preparation of a shaped, hardened, dried, flaked and/or coated fish feed.

10. Use according to claim 10 in the preparation of fish feed pellets.

11. A fish feed pellet **characterised in that** it comprises at least 75% of the composition according to any one of claims 1-8.

12. A pellet according to claim 11, **characterised in that** it further comprises a coating.

13. A pellet according to claim 12 wherein the coating is selected from one or more of: pre-gelatinised starch, maltodextrin, wheat gluten, hydrolysed wheat protein and gelatine.

14. A process for preparing a fish feed composition comprising blending:
- 1-75% by weight, preferably 5-75%, even more preferably 15-75% by weight gluten;
- 25-85% by weight, preferably 40-85% by weight dehulled oilseed and/or maize germ; and
- optionally, one or more additional ingredients.

15. A process according to claim 14 wherein the one or more additional ingredients are selected from:
- one or more additional protein sources;
- one or more additional lipid sources;
- one or more carbohydrate sources; and
- one or more additives.

16. The process according to claim 14 or 15, wherein the one or more additional protein sources are selected from one or more vegetable sources and one or more animal sources.

17. The process according to any one of claims 14-16, wherein the one or more additional protein sources are selected from soy concentrate and fishmeal.

18. The process according to any one of claims 14-17, wherein the one or more additional lipid sources are selected from one or more vegetable sources and one or more animal sources.

19. The process according to any one of claims 14-18, wherein the one or more additional lipid sources are selected from soybean meal, soybean oil, fishmeal and fish oil.

20. The process according to any one of claims 14-19, wherein the carbohydrate source is a cold water soluble starch or starch derivative.

21. A process for preparing fish feed pellets **characterised in that** it consists of:
(a) blending the ingredients of the fish feed composition according to any one of claims 1-8; and
(b) shaping the blend obtained in step (a) into pellets.

22. The process according to claim 21, further comprising a step (c₁) of treating the pellets obtained in step (b) with steam for 1 to 30 seconds.

23. The process according to claim 21 or claim 22, further comprising a step (c₂) of coating the pellets obtained in step (b) or (c₁).

24. The process according to claim 23, wherein the pellets are coated with one or more of: pre-gelatinised starch, maltodextrin, wheat gluten, hydrolysed wheat protein and gelatine.
